# EUROPEAN PATENT SPECIFICATION

(11) **EP 4 606 257 B1**
(45) Date of publication and mention of the grant of the patent: **26.08.2026**
(21) Application number: 24158966.2
(22) Date of filing: 21.02.2024
(51) Int. Cl.: A45C 13/38, A45F 3/04, B62B 5/02

(54) **CARRYING TROLLEY FOR CARRYING LUGGAGE, IN PARTICULAR A BACKPACK**
TRANSPORTWAGEN ZUM TRANSPORTIEREN VON GEPÄCK, INSBESONDERE RUCKSACK
CHARIOT DE TRANSPORT POUR PORTER DES BAGAGES, EN PARTICULIER UN SAC À DOS

(43) Date of publication of application: 27.08.2025
(73) Proprietor: Blink Sourcing Team Ltd., Wan Chai (HK)
(72) Inventor: Gaggio, Alessandro, 11120 Nonthaburi (TH)
(74) Representative: Luppi Intellectual Property S.r.l.

(56) References cited:
- DE-U1- 202007 012 725
- IT-U1- BS 970 122
- JP-A- H0 655 901
- TW-U- M 390 260

## Description

### Technical field

The invention relates to a carrying trolley for carrying a piece of luggage, in particular a backpack.

Specifically but not exclusively, the carrying trolley according to the invention is a carrying trolley that can be pulled by hand that can be used to carry the piece of luggage easily, in particular a backpack like a backpack for school, on uneven terrain or on stairs.

### Background of the invention

From the prior art, carrying trolleys are known for carrying a piece of luggage pulled by hand, which are arranged for carrying items contained in the piece of luggage, along a path on a sliding surface from a starting point to an arrival point. These carrying trolleys avoid a user having to support and carry by hand the piece of luggage or having to load the piece of luggage on the shoulders. When the piece of luggage is very heavy, carrying by hand or on the shoulders can in fact be very tiring for the user and may result in efforts that may damage the back and/or the joints of the user.

Carrying trolleys of known type include a base on which the piece of luggage is suitably positioned.

The piece of luggage can be, in particular, a backpack. In this case, the trolley is also defined as a backpack trolley. For example, the items may comprise books or complementary, teaching, sporting and similar materials. Also, for example, the point of departure can be the home of a schoolchild and the point of arrival can be the inside of a school where the schoolchild has lessons.

Carrying trolleys of known type each further comprise two extendible uprights fixed telescopically to the base and provided, at an upper end thereof, with a handle intended to be gripped by a user when, in use, a user has to pull the carrying trolley.

The uprights extend along a direction substantially orthogonal to the extension direction of the base.

In order to facilitate sliding on the carrying surface, prior-art carrying trolleys for carrying a piece of luggage comprise a plurality of idle wheels that, in use, are intended to roll on the carrying surface by rotating around a respective rotation axis.

In particular, carrying trolleys for carrying a backpack are known that comprise a pair of idle wheels fitted to opposite sides of the base of the carrying trolley, in particular near a joining zone between the base and the uprights. When, in use, the user desires to move the carrying trolley, the user grips the handle and rotates the uprights with respect to a vertical direction. The mass of the carrying trolley is thus now supported on the sliding surface by the two wheels that roll thereupon around respective rotation axes.

A carrying trolley provided with a pair of wheels for carrying a backpack is disclosed, for example, in Italian patent IT 238372 (patent application number 201997900644158).

One drawback of carrying trolleys provided with a pair of wheels for carrying a backpack is that they do not permit easy handling on a sliding surface that comprises sliding planes with different inclines, i.e. on a sliding surface that is not entirely flat. In particular, carrying trolleys provided with a pair of wheels for carrying a backpack do not permit an easy ascent of stairs.

In fact, when the sliding surface is not flat, in particular when it comprises the surface of steps of stairs, the user is forced to lift the carrying trolley for a long stretch, that is substantially equal to the riser of the steps because the pair of wheels does not rest on a surface on which it is possible to unload the vertical part of the weight force. Along this stretch, the mass of the carrying trolley bears down entirely on the user, who is accordingly subjected to significant effort. Only when the wheels rest on a tread of a successive step is the user partially relieved of the weight force of the carrying trolley.

Increasing the dimensions of the wheels could slightly limit the extent of this stretch but would on the other hand entail an increase in overall dimensions, mass and the cost of the carrying trolley. Further, the average dimensions of the diameter of the wheels cannot be increased at will because the diameters have to take account of the dimension of a tread of the steps.

Further, from the prior art, carrying trolleys for carrying a backpack are known that comprise a pair of support devices, or hubs, each provided with three spokes at a respective end of each of which an idle wheel is fitted so as to be freely rotatable. Such carrying trolleys thus comprise six wheels all having the same diameter.

The support devices are mounted on opposite sides of the base of the trolley and rotate, in use, around a respective rotation axis. The rotation axes of the wheels of each support device are arranged substantially at the vertices of an equilateral triangle. The arrangement of the wheels of each support device is also known as a "star arrangement". When, in use, the user desires to move the carrying trolley, the user grips the handle and rotates the uprights with respect to a vertical direction. The mass of the carrying trolley is thus now supported on the sliding surface by some of the wheels, in particular two opposite wheels, which roll thereupon by rotating around respective rotation axes whilst the other opposite wheels do not rotate.

When the carrying trolley encounters a slope variation on the sliding surface, for example when the carrying trolley encounters a stair step, together with the rolling of some of the wheels on the sliding surface, the support devices rotate around their rotation axis and the wheels that will rotate on the sliding surface vary with respect to those that rotated before the carrying trolley encountered the slope variation.

A carrying trolley provided with a pair of support devices for carrying a backpack, each support device being provided with three wheels the rotation axes of which are arranged at the vertices of a triangle, is disclosed, for example, in Taiwan utility model TWM390260U.

One drawback also of carrying trolleys for carrying a backpack provided with a pair of support devices each provided with three wheels the rotation axes of which are arranged at the vertices of a triangle is that they do not permit easy handling on a sliding surface that comprises sliding planes of different inclines, i.e. on a not completely flat sliding surface. In particular, carrying trolleys provided with a pair of support devices for carrying a backpack with each pair of support devices being provided with three wheels arranged at the vertices of a triangle do not permit easy ascent of stairs.

In fact, when the sliding surface is not flat, in particular when the sliding surface comprises the surface of stair steps, also in this case the user is forced to lift for a stretch the carrying trolley, this stretch being equal to at least one significant part of the riser of a step, since none of the wheels rests on a surface onto which it is possible to unload the vertical component of the weight force. Along this stretch, the mass of the carrying trolley weighs entirely on the user, who is therefore subjected to significant effort. Only when at least one pair of opposite wheels again rests on a tread of a successive step following the rotation of the support devices is the user partially relieved of the weight force of the carrying trolley.

Also in this case, increasing the dimension of the diameters of the wheels or length of the spokes could slightly lighten the extent of this stretch but on the other hand could cause further drawbacks such as an increase in the overall dimensions, mass and cost of the carrying trolley. Further, the length of the spokes and the diameter of the wheels cannot be increased at will because they have to take account of the average dimensions of a tread of the steps. Also, an excessive length of the spokes could mean that when moving from the ground to the first step or from one step another, two or more opposite spokes may knock against the corner of a step, making the ascent difficult.

Another drawback of the carrying trolleys provided with a pair of support devices for carrying a backpack with each support device provided with three wheels arranged at the vertices of a triangle is that the support devices are structurally complex and can get easily damaged, for example following knocks against an edge of a step or uneven portions of a sliding surface. An example of a carrying trolley having a frame, a gripping handle and a pair of skate devices, wherein the rolling elements of each skate device are at least four, is known from JPH0655901A.

One object of the invention is to improve the carrying trolleys for carrying a piece of luggage, in particular a backpack, of known type.

Another object of the invention is to provide a carrying trolley for carrying a piece of luggage, in particular a backpack, which is able to overcome the limits or drawbacks of the prior art.

A further object of the invention is to provide a carrying trolley for carrying a piece of luggage, in particular a backpack, that enables the effort to be limited that is required of a user who has to pull the carrying trolley on stairs or uneven terrain.

Still another object is to provide a carrying trolley for carrying a piece of luggage, in particular a backpack, which occupies a limited space.

A further object of the invention is to provide a carrying trolley that has a simplified structure.

Such objects are achieved by the carrying trolley according to one or more of the claims set out below.

Owing to the invention, it is thus possible to obtain a carrying trolley for carrying a piece of luggage, in particular a backpack, that enables a user to carry the piece of luggage more easily even in the presence of uneven terrain or stairs. The carrying trolley according to the invention is in fact provided with at least four rolling elements for each skate device, forming a first pair and a second pair that are consecutive and distinct that can act along different sliding directions.

Each skate device is as if it comprised at least two in-line skates arranged angled in relation to one another each of which comprises two rolling elements, in particular two wheels.

Also, owing to the invention, it is possible to provide a trolley having an original appearance.

Owing to the invention, it is then possible to obtain a carrying trolley that enables stairs to be ascended easily and at the same time has reduced overall dimensions.

### Short description of the drawings

The invention can be better understood and implemented with reference to the enclosed drawings, which illustrate an embodiment thereof by way of non-limiting example, in which:
Figure 1 is a lateral perspective view of a carrying trolley according to the invention in a stationary rest configuration in which telescopic rod means of the carrying trolley is in a retracted end-of-stroke configuration;
Figure 2 is a front view of the carrying trolley of Figure 1;
Figure 3 is a rear view of the carrying trolley of Figure 1;
Figure 4 is a side view from one side of the carrying trolley of Figure 1;
Figure 5 is a side view from the other side of the carrying trolley of Figure 1;
Figure 6 is a top view of the carrying trolley of Figure 1;
Figure 7 is a bottom view of the carrying trolley of Figure 1;
Figure 8 is a lateral perspective view of the carrying trolley of Figure 1 in an operating configuration in which the telescopic rod means is in an extended end-of-stroke configuration;
Figure 9 is a side view of the carrying trolley of Figure 8;
Figure 10 is a frontal view of the carrying trolley of Figure 8;
Figure 11 is an image showing the progressive interaction of the carrying trolley according to the invention with stair steps during the ascent or descent of the stairs;
Figure 12 is an image showing the progressive interaction of the carrying trolley according to the invention during a movement on uneven terrain.

### Detailed description

With reference to the aforesaid Figures, with reference number 1 a carrying trolley according to the invention is indicated that is arranged for carrying a piece of luggage, in particular, but not exclusively, a backpack, for example a school backpack, or a bag.

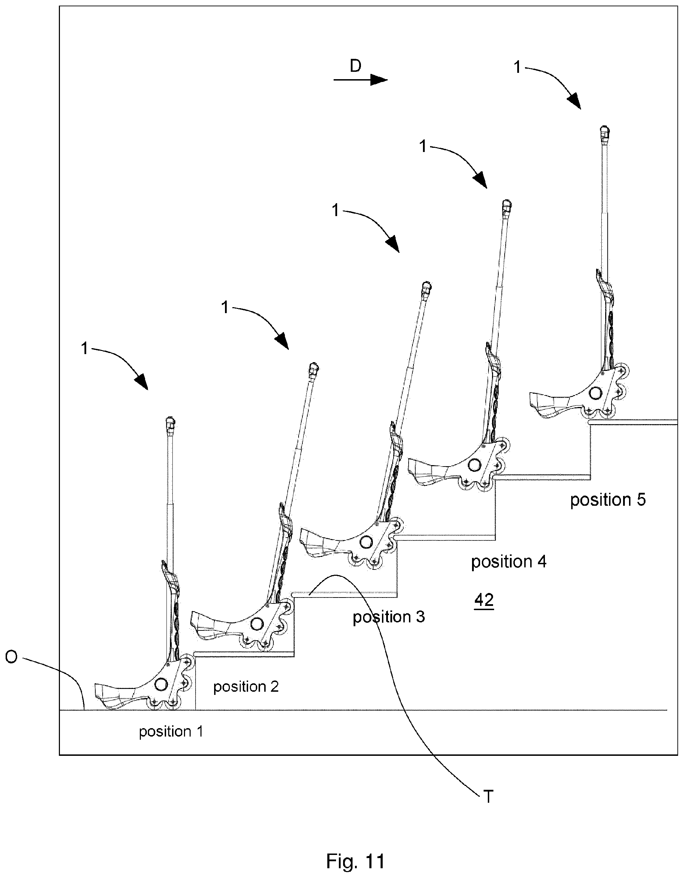

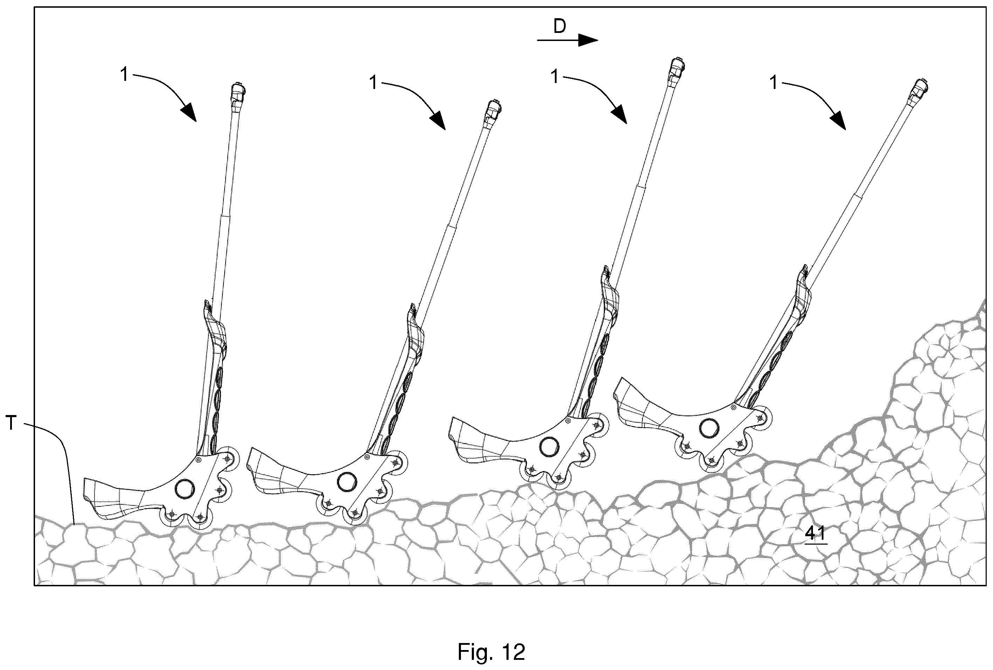

In particular, the carrying trolley 1 according to the invention is used for easily carrying the piece of luggage along a path on a sliding surface T, or carrying surface, from a point of departure to a point of arrival. This path can comprise uneven terrain 41 (Figure 12) or stairs 42 (Figure 11).

The path can have a sliding direction D, indicated, for example, in Figures 11 and 12.

The piece of luggage is suitable for containing items of various types comprising, for example, school things like books and/or notebooks.

The carrying trolley 1 according to the invention is, in particular, pullable by a user, like, for example, a student. However, in one embodiment that is not illustrated, the carrying trolley 1 according to the invention is also transportable in a motorised manner by the user.

The carrying trolley 1 comprises a frame 2 arranged for supporting the piece of luggage during movement thereof by means of the carrying trolley 1.

The frame 2 can have a general L shape.

The frame 2 can be made of plastics, in particular stiff plastics at ambient temperature, possibly reinforced with carbon fibre or another similar material.

The frame 2 can be made as one piece.

The frame 2 is provided with a lower support part 3, or base part, configured to restingly receive a base, or a bottom wall, of the piece of luggage.

The lower support part 3 defines the base element of the L shape of the frame 2.

The lower support part 3 can comprise a bottom wall 4 provided with a bottom face 5 arranged for restingly receiving and contacting the base of the piece of luggage.

The lower support part 3 can further comprise a side wall 6 provided with a lateral containing surface 7 arranged for containing laterally the piece of luggage.

The side wall 6 projects away from the bottom wall 4.

The side wall 6 extends in particular, on a perimeter of the bottom wall 4. In particular, the side wall 6 can extend over the entire perimeter of the bottom wall 4.

The side wall 6 can be made as a single body with the bottom wall 4. In one embodiment that is not illustrated in the drawings, the side wall 6 is connected to the bottom wall 4 by connecting elements of known type, comprising, for example, nuts and bolts.

In the embodiment shown in the Figures the bottom wall 4 has a substantially rectangular plan form with bevelled edges. Nevertheless, the bottom wall 4 can have any other plan shape that is suitable for effectively supporting the piece of luggage.

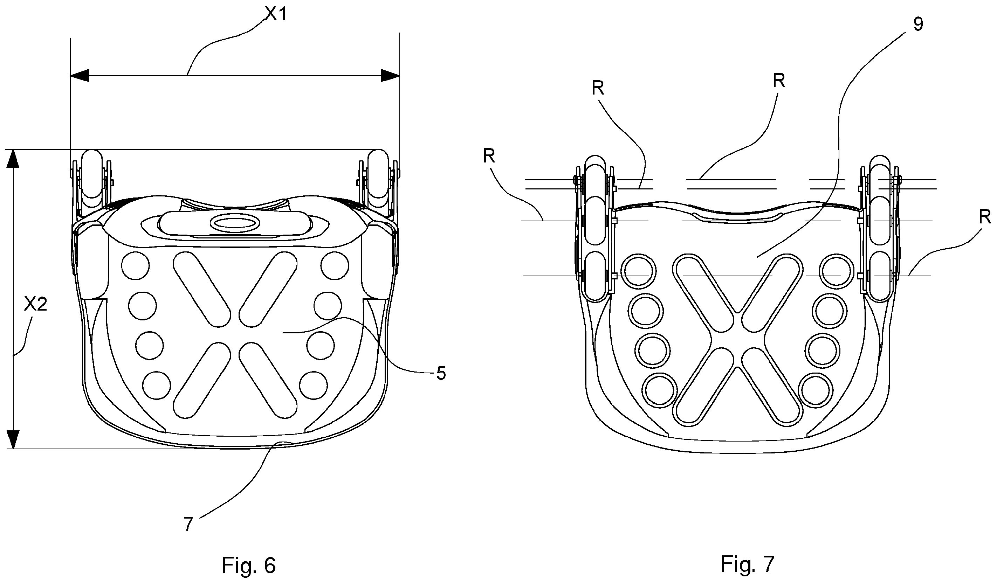

The lower support part 3 can comprise at least one lower protrusion 8 projecting from a lower face 9 (Figure 7) of the bottom wall 4. The lower face 9 and the bottom face 5 are, in particular arranged on opposite sides of the bottom wall 4.

The at least one lower protrusion 8 can be provided with an end portion 10 arranged for contacting the sliding surface T, for example when the carrying trolley 1 is in a stationary rest configuration S, so as to act as a leaning element for the frame 2 and cooperate in the stability of the carrying trolley 1 in the stationary rest configuration S.

In other words, the at least one lower protrusion 8 protrudes downwards, i.e. in use towards the sliding surface T, and is usable as a leaning element.

The carrying trolley 1 is arranged in the stationary rest configuration S when the piece of luggage does not have to be carried, i.e. when the carrying trolley 1 is not moved.

In the embodiment of carrying trolley 1 illustrated in the Figures, the lower part 3 comprises two lower protrusions 8, but in embodiments not illustrated there can also be just one lower protrusion 8 or more than two lower protrusions 8.

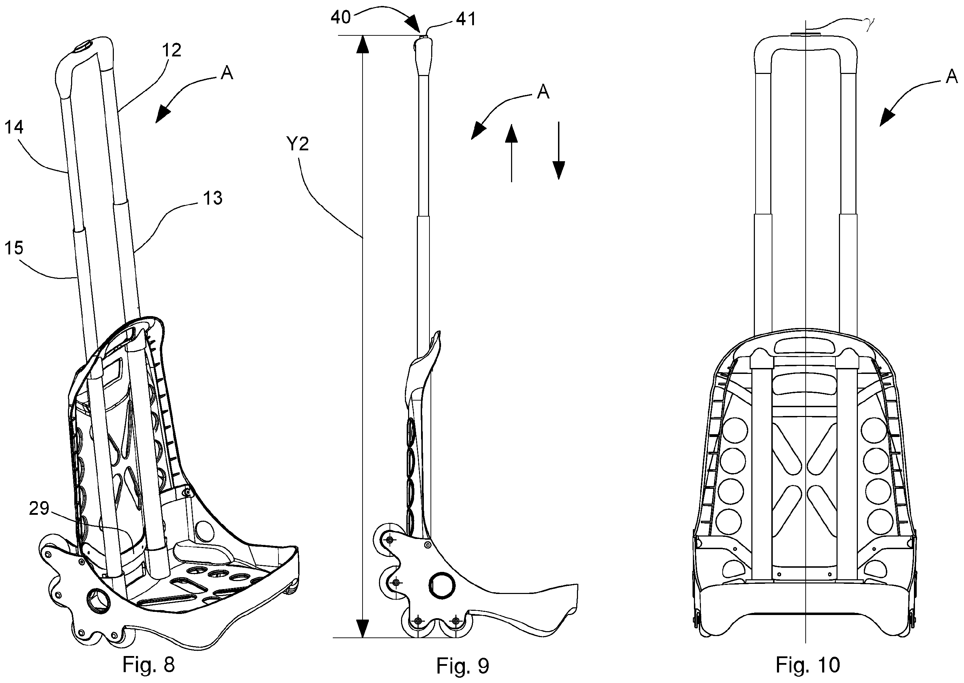

With reference in particular to Figures 8 to 10, the carrying trolley 1 comprises telescopic rod means 11 comprising at least one upper rod 12 and at least one lower rod 13 fixed to the lower support part 3 that define a telescopic upright of the telescopic rod means 11.

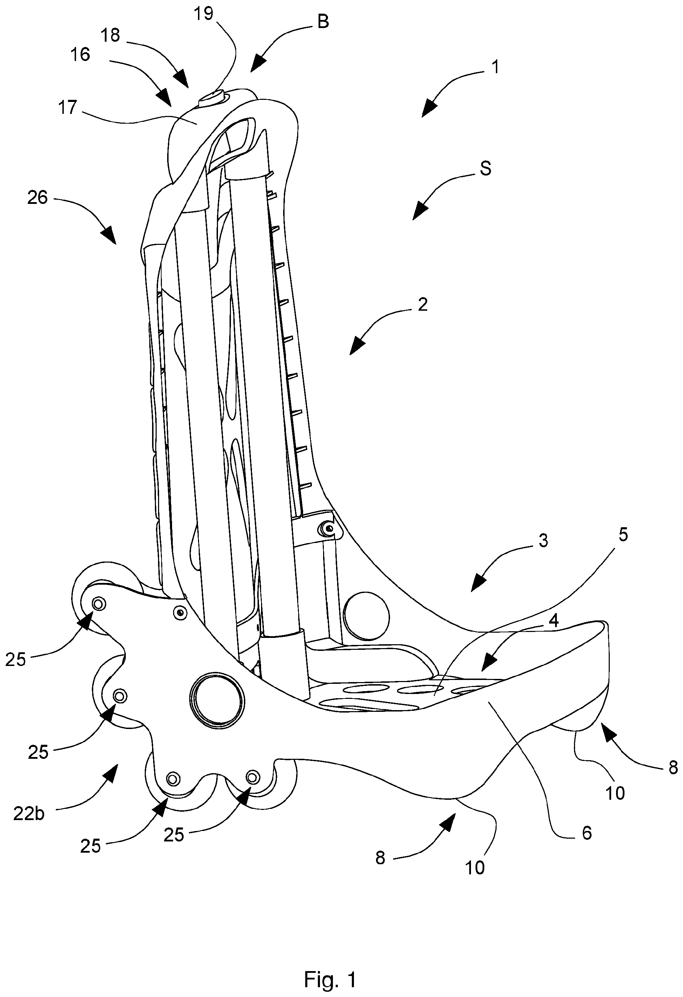

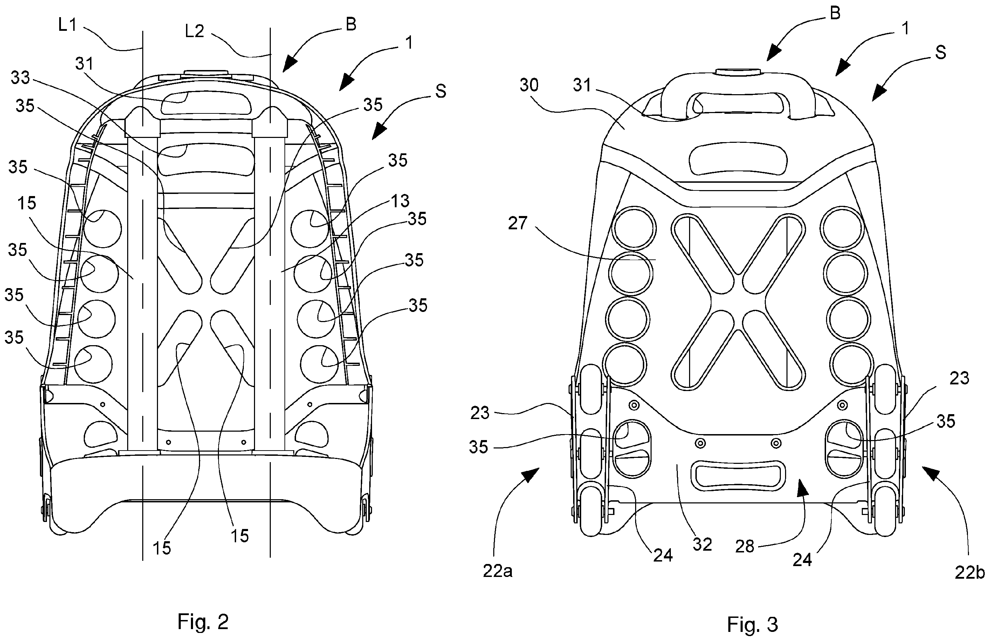

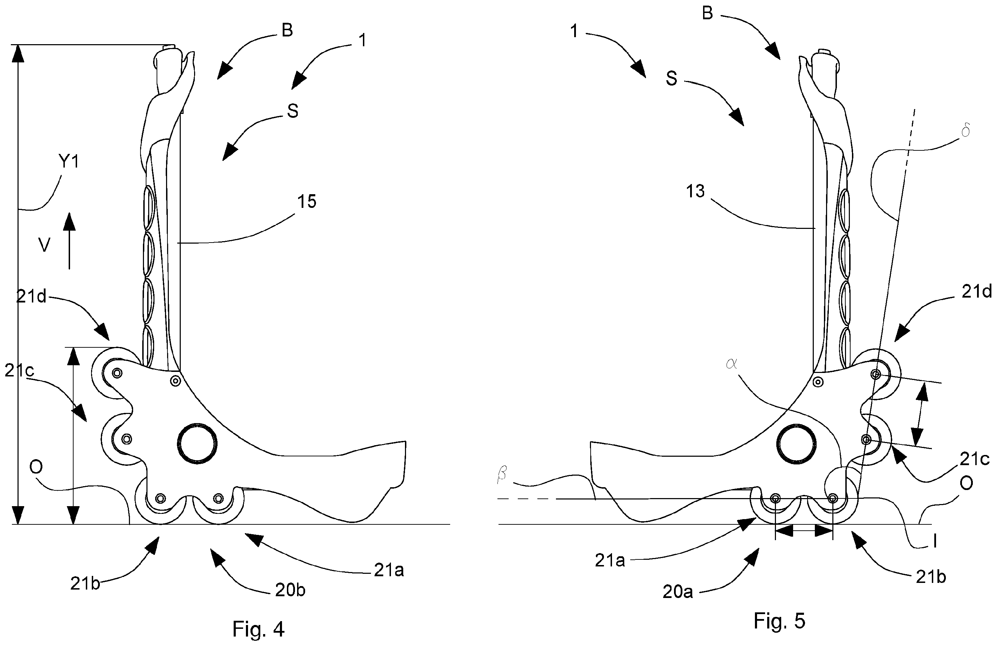

The upper rod 12 and the lower rod 13 are so connected together that the upper rod 12 is slidable with respect to the lower rod 13 so that the telescopic rod means 11 can alternatively adopt an extended end-of stroke configuration A, shown in particular in Figures 1 to 5, and a retracted end-of-stroke configuration B, shown in particular in Figures 8 to 10.

In the extended end-of-stroke configuration A, the telescopic rod means 11 has a maximum length, whereas in the retracted end-of-stroke configuration B the telescopic rod means 11 has a minimum length.

In use, the telescopic rod means 11 can adopt an intermediate position between the extended end-of-stroke configuration A and the retracted end-of-stroke configuration B on the basis, for example, of the height of a user.

In the embodiment shown in the Figures, the telescopic rod means 11 comprises a further upper rod 14 and a further lower rod 15 fixed to the lower support part 3 that defines a further telescopic upright of the telescopic rod means 11.

The upper rod 12 and the lower rod 13 extend mainly along a longitudinal axis L1 substantially parallel to a longitudinal axis L2 of prevalent extent of the further upper rod 14 and of the further lower rod 15. The longitudinal axis L1 of the upper rod 12 and of the lower rod 13 is substantially parallel to a vertical direction V, substantially parallel to the vector associated with the force of gravity and with an opposite direction, when the carrying trolley 1 is in the stationary rest configuration S.

The upper rod 12 and the further upper rod 14 are connected above in a joining portion 16.

The carrying trolley 1 further comprises a gripping handle 17 obtained in the telescopic rod means 11 and intended to be gripped by the user for pulling the carrying trolley 1 along the sliding surface T.

The gripping handle 17 is defined, in particular, by the joining portion 16 or by a part thereof.

In one embodiment that is not illustrated, the telescopic rod means 11 comprises a single telescopic rod.

The upper rod 12 and/or the lower rod 13 and/or the further upper rod 14 and/or the further lower rod 15 can each be tubular shaped, i.e. can be provided with a longitudinal cavity inside.

For example, the upper rod 12 can slide, in use, into the lower rod 13 (and the further upper rod 14 can slide, in use, into the further lower rod 15, if present) so that the telescopic rod means 11 can alternatively adopt the extended end-of-stroke configuration A and the retracted end-of-stroke configuration B.

The upper rod 12 and/or the lower rod 13 and/or the further upper rod 14 and/or the further lower rod 15 can each be made of a metal material like, for example, steel.

The telescopic rod means 11 can further comprise locking means 18 arranged for locking a reciprocal movement of the upper rod 12 and of the lower rod 13 (and a reciprocal movement of the further upper rod 14 and of the further lower rod 15, if present) such that the telescopic rod means 11 is locked in the extended end-of stroke configuration A, in the retracted end-of-stroke configuration B or in one or more intermediate extending configurations so as to position the gripping handle 17 at a height that is ergonomic and convenient for the user for pulling the carrying trolley 1.

The locking means 18 can comprise a button 19 arranged in the joining portion 16 arranged for enabling the reciprocal movement of the upper rod 12 and of the lower rod 13 (and a reciprocal movement of the further upper rod 14 and of the further lower rod 15, if present).

For example, the locking means 18 can further comprise at least one stop pin for each upper rod present, connected to the button 19 and arranged for being retracted when, in use, the button 19 is pushed by the user. Each stop pin is suitable for being slidly inserted into a respective hole obtained in each upper rod present.

Still, for example, at last one first hole and a second hole are obtained in each of the lower rods present. The first hole is intended, in particular, to be positioned aligned on the hole of each of the upper rods present when the telescopic rod means 11 are in the extended end-of stroke configuration A, whereas the second hole is intended, in particular, to be positioned aligned on the hole of each of the upper rods present when the telescopic rod means 11 is in the retracted end-of stroke configuration B. In particular, the stop pin is inserted alternatively into the first hole and into the second hole so as to lock the telescopic rod means 11 in the extended end-of-stroke configuration A or in the retracted end-of stroke configuration B. In other words, the stop pin, by interaction with the holes described above, constrain together the upper rods and the lower rods present. When the user actuates, in particular presses, the button 19, each stop pin present retracts inside the respective hole and the telescopic rod means 11 can be moved.

The locking means 18 is of known type and will not be disclosed in greater detail below.

The carrying trolley 1 further comprises a pair of skate devices 20a, 20b mounted to the frame 2 on opposite sides of the lower support part 3 to facilitate in use sliding of the carrying trolley along the sliding surface T.

In particular, the pair of skate devices 20a, 20b comprises a first skate device 20a and a second skate device 20b connected, in particular to opposite sides of the bottom wall 4.

In particular, the first skate device 20a and the second skate device 20b can be arranged specularly with respect to a longitudinal plane γ substantially perpendicular to the bottom face 5, for example a symmetrical plane of the carrying trolley 1.

Each skate device 20a, 20b comprises a plurality of rolling elements 21a, 21b, 21c, 21d, each rolling element 21a, 21b, 21c, 21d being rotatable around a respective rotation axis R. The rotation axes R of the plurality of rolling elements 21a, 21b, 21c, 21d are substantially parallel to one another.

The rolling elements 21a, 21b, 21c, 21d of each skate device 20a, 20b are at least four in number.

The rotation axes R of the rolling elements 21a, 21b, 21c, 21d are arranged, in particular, at a growing distance both along the vertical direction V substantially parallel to and with a direction opposite the vector associated with the force of gravity, and along the sliding direction D substantially perpendicular to the vertical direction V.

The rolling elements 21a, 21b, 21c, 21d of each skate device 20a, 20b form at least one first pair (for example the pair of rolling elements 21a, 21b) and one second pair (for example the pair of rolling elements 21c, 21d) of consecutive and distinct rolling elements for each skate device 20a, 20b. The term "distinct" means that the first pair and the second pair of rolling elements 21a, 21b, 21c, 21d have no rolling element 21a, 21b, 21c, 21d in common. The term "consecutive" means that the pairs are formed by considering pairs of immediately successive rolling elements even if they are on different sliding planes.

The first pair and the second pair of rolling elements can act along different sliding directions.

The rotation axes of the first pair of rolling elements lie on a first plane and the rotation axes of the second pair of rolling elements lie on a second plane. The first plane and the second plane intersect on an intersection line I (or line of origin) that bounds a first half plane β on which the rotation axes of the first pair of rolling elements lie and a second half plane δ on which the rotation axes of the second pair of rolling elements lie, in which the first half plane β and the second half plane δ form together an angle α that is greater than or the same as 90°.

The angle α is comprised, in particular, between 90° and 110°. This angle α ensures that the carrying trolley 1 is more easily transportable when the carrying trolley 1 is pulled on sliding surfaces having a different inclination, for example uneven terrain or stairs, in particular when the inclination increases with respect to a horizontal sliding plane O (for example when climbing a step from a floor or from a horizontal sliding plane), inasmuch as one of the two pairs of rolling elements, for example the second pair of rolling elements already faces the sliding surface on a slope that is different from the horizontal slope and thus goes to interact first with the sliding surface. The horizontal sliding plane O is a plane that is substantially perpendicular to the vector associated with the force of gravity, and thus substantially perpendicular to the vertical direction V. For example, when a step is to be climbed, one or both of the rolling elements of the second pair of rolling elements already abut on the rise of the step and it is the same rolling element/s that will be involved in rising to the tread of the step.

Advantageously, for questions of load symmetry, the number of rolling elements 21a, 21b, 21c, 21d of the first skate device 20a can correspond, i.e. be equal to, the number of rolling elements 21a, 21b, 21c, 21d of the second skate device 20b, as in the embodiment of carrying trolley 1 illustrated in the Figures.

In one version of carrying trolley 1 not illustrated in the Figures, however, the number of rolling elements 21a, 21b, 21c, 21d of the first skate device 20a can be different from the number of rolling elements 21a, 21b, 21c, 21d of the second skate device 20b.

Each rolling element 21a, 21b, 21c, 21d of the first skate device 20a can be coaxial with a respective rolling element 21a, 21b, 21c, 21d of the second skate device 20b.

In the embodiment shown in the Figures, each skate device 20a, 20b comprises four rolling elements 21a, 21b, 21c, 21d, i.e. a first rolling element 21a, a second rolling element 21b, a third rolling element 21c and a fourth rolling element 21d arranged in succession i.e. one after the other according to this order. In particular, the first pair of rolling elements can consist of the first rolling element 21a and of the second rolling element 21b, whereas the second pair of rolling elements can consist of the third rolling element 21c and of the second rolling element 21d.

In the embodiment shown in the Figure, the angle α is about 108°.

In the stationary rest configuration S the rolling elements of a pair of rolling elements, for example the first pair of rolling elements act as leaning elements for the carrying trolley 1 on the sliding surface T on which, for example, the horizontal plane O rests.

Accordingly, the carrying trolley 1 can have as leaning elements in the stationary rest configuration S a pair of rolling elements and the end portion 10 of each lower protrusion 8 present.

Taking into consideration the stationary rest configuration S, the rotation axis R of the rolling element 21a, 21b, 21c, 21d located at a greater distance from the horizontal plane O with respect to the other rolling elements 21a, 21b, 21c, 21d of each skate device 20a, 20b, is at a distance comprised between 10 cm and 20 cm, in particular between 14 cm and 17 cm.

In the embodiment shown in the Figures, the aforesaid distance of the fourth rolling element 21d with respect to the horizontal plane O is about 15.55 cm.

When in use, i.e. when the carrying trolley 1 is pulled along the sliding surface T, the carrying trolley 1 adopts a plurality of operating configurations (see for example Figures 11 and 12) in which, depending on the type of sliding surface T, a single rolling element of each pair of skate devices 20a, 20b or several rolling elements 21a, 21b, 21c, 21d of each pair of skate devices 20a, 20b can roll on the sliding surface T.

An interaxle spacing between the rotation axes R of rolling elements of each pair of rolling elements can be comprised between 5.8 cm and 7.1 cm, in particular between 6.0 cm and 6.9 cm.

An interaxle spacing between the rotation axis R of two successive rolling elements belonging to two different pairs can be greater than the interaxle spacings of the rolling elements that belong to the first pair or to the second pair.

In the embodiment of carrying trolley 1 shown in the Figures, the interaxle spacing between the first rolling element 21a and the second rolling element 21b is about 6 cm, the interaxle spacing between the second rolling element 21b and the third rolling element 21c is about 7.4 cm and the interaxle spacing between the third rolling element 21c and the fourth rolling element 21d is about 6.86 cm.

The bottom face 5 can be substantially parallel and can belong to a substantially parallel plane, in particular, to the first half plane β.

The bottom face 5 can be substantially perpendicular to the longitudinal axis L1 of the telescopic rod means 11.

Each skate device 20a, 20b comprises a respective support structure 22a, 22b arranged for supporting the plurality of rolling elements 21a, 21b, 21c, 21d.

The support structures 22a, 22b can be arranged specularly with respect to the longitudinal plane γ.

Each support structure 22a, 22b is stiffly fixed to the frame 2. In particular, each support structure 22a, 22b, unlike the prior-art carrying trolleys, does not rotate with respect to the frame 2 during use.

In fact, the carrying trolley 1 is devoid of support elements for supporting the rolling elements that rotate when the carrying trolley 1 encounters sliding surfaces with different inclines, in particular when the carrying trolley 1 encounters a step or obstacle to be got over.

Also, in particular, each support structure 22a, 22b is stiffly fixed to the lower support part 3 of the frame 2.

Each support structure 22a, 22b comprises a first wing element 23 and a second wing element 24 arranged for supporting on opposite side the rolling elements 21a, 21b, 21c, 21d of each skate device 20a, 20b. In particular, each rolling element 21a, 21b, 21c, 21d is rotatably supported by a respective support structure 22a, 22b.

The first wing element 23 has a face facing the outside of the carrying trolley 1.

Each first wing element 23 and each second wing element 24 project, in particular, from a portion of side wall 6 placed near the telescopic rod means 11 and projects away from the carrying trolley 1.

Each rolling element 21a, 21b, 21c, 21d comprises, in particular, an idle wheel or an idle roller fitted to the aforesaid support structure 22a, 22b, this idle rotating wheel or roller being freely rotatable around the respective rotation axis R.

Each rolling element 21a, 21b, 21c, 21d can have a diameter comprised between 5 cm and 6 cm, for example can have a diameter of 5.3 cm.

The rotation axes R of the plurality of rolling elements 21a, 21b, 21c, 21d intersect a plane perpendicular thereto, like the longitudinal plane γ, in a plurality of points, said points defining the vertices of an irregular polygon. At least two of the inner angles of this irregular polygon are obtuse.

The carrying trolley 1 can comprise rotatable connecting means 25 arranged for connecting rotatably each rolling element 21a, 21b, 21c, 21d to a first wing element 23 and to a second wing element 24. The rotatable connecting means 25 are of known type and can comprise, for example, nuts and bolts.

The frame 2 can further comprise a front part 26, or upright part, connected, in particular stiffly, to the lower part 3.

The front part 26 extends prevalently in height, i.e. along a direction substantially parallel to the direction V, and intersects the longitudinal plane γ.

The part 26 is defined front considering a regular use of the carrying trolley 1 when it is pulled along the sliding direction D, in which the user is placed near the front part 26.

The front part 26 defines the element that rises in height of the L shape of the frame 2.

The front part 26 can comprise a first part 27 projecting from a front portion 28 of the side wall 6 and extending transversely to the bottom wall 4. A portion of the telescopic rod means 11 that extends near the first part 27, is mounted interposed between the front portion 28 and a rear portion 29 of the side wall 6, opposite the front portion 28, the portion 28 and the portion 29 being defined respectively front and rear with respect to the sliding direction D. In other words, the front portion 28 is nearer the user in regular use of the carrying trolley 1 with respect to the rear portion 29.

The front part 26 can further comprise a second part 30 connected to the first part 27. For example, the first part 27 and the second part 30 are made as a single body. Alternatively, the first part 27 and the second part 30 can be joined by connecting elements of known type, for example comprising nuts and bolts.

An upper end portion 40 of the second part 30 can protrude inside the carrying trolley 1, i.e. on the bottom wall 4.

A height of the front part 26, taken along the vertical direction V when the carrying trolley is in the stationary rest configuration S, is such as to be able to contain the height of the piece of luggage. For example, a height of an upper end 40 of the second part 30, measured with respect to the bottom face 5, can be comprised between 30 cm and 70 cm, in particular between 40 cm and 60 cm. In the embodiment illustrated in the Figures, this height is about 45 cm.

The carrying trolley 1 has a width X1, measured in a direction substantially perpendicular to the longitudinal plane γ, which can be comprised between 30 cm and 40 cm. In the embodiment illustrated in the Figures, this width X1 is about 35 cm.

The carrying trolley 1 has a further width X2, measured in a direction substantially parallel to the longitudinal plane γ, that can be comprised between 25 cm and 40 cm. In the embodiment illustrated in the Figures, this width X2 is about 32.5 cm.

The carrying trolley 1 has a height, measured in a direction substantially perpendicular to the horizontal sliding plane O, variable according to the position in which the telescopic rod means 11 are. In fact, when the telescopic rod means 11 is in the extended end-of stroke configuration A, the carrying trolley 1 has a minimum height Y1 that can be comprised between 90 cm and 100 cm. In the embodiment illustrated in the Figures, this minimum height Y1 is about 95 cm. When on the other hand the telescopic rod means 11 is in the retracted end-of stroke configuration B, the carrying trolley 1 has a maximum height Y2 that can be comprised between 40 cm and 60 cm. In the embodiment illustrated in the Figures, this maximum height Y2 is about 49 cm.

In the second part 30, a first opening 31 can be obtained that is arranged for acting as a further gripping handle intended to be gripped by the user for pulling the carrying trolley 1 along the sliding surface T.

In particular the first opening 31 is obtained in the second part 30 at a height that, when the telescopic rod means 11 is in the retracted end-of-stroke configuration B, is near the gripping handle 17 so that the user can grip them simultaneously.

The first wing element 23 and the second wing element 24 project in particular from the front portion 28 of the side wall 6 away from a front face 32 of the front portion 28.

The first wing element 23 and the second wing element 24 are mounted with respect to the longitudinal plane γ, to opposite sides of the side wall 6 outside the telescopic rod means 11.

One portion of the second wing element 24 can define a portion of side wall 6.

Each support structure 22a, 22b is connected to the side wall 6 and/or to the front part 26. For example, each support structure 22a, 22b is made as a single body with the side wall 6 and/or with the front part 26. Alternatively, each support structure 22a, 22b can be joined to the side wall 6 and/or to the front part 26 by connecting elements of known type, for example comprising nuts and bolts.

In the second part 30, a second opening 33 can be further obtained configured to permit the transit of fixing elements of the piece of luggage (for example shoulder straps or straps). The second opening 33 is interposed between the first opening 31 and the bottom face 5 with respect to the vertical direction V.

In the second part 30, at least one third opening 34 can be further obtained that is configured to enable a portion of each lower rod 13, 15 present to transit. In fact, in the second part 30 the telescopic rod means 11 traverses the front part 26.

A plurality of lightening openings 35 can be obtained in the frame 2 that are arranged for lightening a mass of the carrying trolley 1.

One or more of these lightening openings 35 is/are obtained in the bottom wall 4 and/or in the front part 26 and/or in the side wall 6 and/or in the first wing element 23.

One or more of these lightening openings 35 can have a circular and/or oval and/or oblong shape.

One or more of the lightening openings 35 can have an X-shaped plan shape.

A plurality of the lightening openings 35 can be arranged to form an X shape, for example in the bottom wall 4 and/or in the second part 30.

An example of use will be set out below of the carrying trolley 1 in particular when the sliding surface T comprises ascending the steps of stairs, as shown in Figure 11. When a user has to carry the piece of luggage by the carrying trolley 1, the user presses the button 19 to release the movement of the upper rod 12 and of the further upper rod 14, if present, and enable the telescopic rod means 11 to be taken to the extended end-of stroke configuration A, if it was not already there. Simultaneously or subsequently, the user tilts the carrying trolley 1 by gripping, for example, the gripping handle 17 and pulls the carrying trolley 1 along the sliding direction D, for example along the horizontal sliding plane O. The carrying trolley 1 is in a position in which the longitudinal axis L1 of the upper rod 12 and the longitudinal axis L2 of the further upper rod 14, if present, is substantially transverse to the vertical direction V. Some of the rolling elements 21a, 21b, 21c, 21d of the skate devices 20a, 20b start to roll on the sliding surface T.

In the embodiment illustrated in the Figures, for example, the second rolling elements 21b in this phase start to roll.

When the carrying trolley 1 reaches a first step of the stairs 42, the user returns the carrying trolley 1 to a position in which the longitudinal axis L1, L2 of the upper rod 12 and of the further upper rod 14, if present, is again substantially parallel to the vertical direction V. One of the rolling elements 21a, 21b, 21c, 21d of each skate device 20a, 20b, i.e. the one having an upper end at a height greater than the others, already abuts on the riser of the first step, as illustrated in the position 1 of Figure 11. The user can pull the carrying trolley 1 facilitated by the rolling of the rolling elements 21a, 21b, 21c, 21d on the riser of the first step and, subsequently, on the edge of the first step, as illustrated in the subsequent positions 2 and 3 of Figure 11.

In the embodiment illustrated in the Figures, for example, the fourth rolling elements 21d in a first ascent phase start to roll and help the carrying trolley 1 ascend onto the first step (position 2 of Figure 11).

Whilst the carrying trolley 1 continues moving on the stairs 42, the ascent is also helped by other rolling elements 21a, 21b, 21c, 21d.

In the embodiment illustrated in the Figures, for example, the third rolling elements 21c, together with the fourth rolling elements 21d, in a second phase (corresponding to position 3 of Figure 11), assist the ascent of the carrying trolley 1 onto the first step. Subsequently, in a third phase, the second rolling elements 21b, together with the third rolling elements 21c, assist the ascent of the carrying trolley 1 on the first step (corresponding to position 4 of Figure 11). Lastly, the carrying trolley 1 reaches the tread of the first step and the first rolling elements 21a, together with the second rolling elements 21b, roll on the tread (corresponding to position 5 of Figure 11) because the carrying trolley 1 is returned to a position in which the longitudinal axis L1, L2 of the upper rod 12 and of the further upper rod 14, if present, is again substantially parallel to the vertical direction V.

Positions 1 to 5 are substantially repeated for the entire ascent of the stairs 42.

When the sliding surface T is arranged on the uneven ground 41, generally at least two rolling elements 21a, 21b, 21c, 21d of each skate device 20a, 20b (i.e. at least four rolling elements 21a, 21b, 21c, 21d) roll on the sliding surface T, enabling the carrying trolley 1 to be pulled by the user more easily than with prior-art carrying trolleys in which, when the uprights are tilted with respect to a horizontal sliding plane, just one rolling element per side rolls on the sliding surface.

The carrying trolley 1 for carrying a piece of luggage, in particular a backpack, as previously described, has numerous advantages.

Firstly, the presence of a greater number of successive rolling elements compared to prior-art carrying trolleys enables, for the same diameter of the rolling elements, the rolling surface to be increased and pulling of the carrying trolley 1 by a user to thus be made easier. Also the rolling surface is increased owing to the arrangement of the rolling elements 21a, 21b, 21c, 21d in succession in each skate device 20a, 20b, which enables several opposite pairs of rolling elements 21a, 21b, 21c, 21d to roll simultaneously on the sliding surface T. Owing to the greater number of rolling elements 21a, 21b, 21c, 21d and the particular arrangement thereof, it is possible to unload the vertical component of the weight force of the carrying trolley 1 by means of the rolling elements 21a, 21b, 21c, 21d that rest totally or partially on the sliding surface T for a stretch greater than the prior-art carrying trolleys.

Secondly, the particular arrangement of the rolling elements 21a, 21b, 21c, 21d in which the angle α between the first half plane β and the second half plane δ, as defined above, on which the rotation axes R of the first pair of rolling elements and of the second pair of rolling elements respectively lie that is greater than or the same as 90°, in particular comprised between 90° and 110°, facilitates, during pulling of the carrying trolley 1, the movements along stairs (also along spiral staircases or along helicoidal stairs that have narrow treads), uneven steps or terrain, because at least one of the elements 21a, 21b, 21c, 21d of each skate device 20a, 20b already rests on a riser of a step when the carrying trolley 1 reaches the step, without the need for rotation of the support structures 22a, 22b of the rolling elements 21a, 21b, 21c, 21d.

In fact, the carrying trolley 1 has support structures 22a, 22b of the rolling elements 21a, 21b, 21c, 21d stiffly fixed to the frame 2 and is devoid of tilting elements that may get damaged during movement along stairs, for example by knocking against corners of steps. The carrying trolley 1 therefore has a more simplified structure than prior-art carrying trolleys that comprise triangular structures with spokes that in use rotate around a rotation axis.

The particular arrangement of the rolling elements 21a, 21b, 21c, 21d further enables a non-bulky carrying trolley for carrying a piece of luggage to be obtained.

Pulling the carrying trolley 1 is much easier and without excessive effort for the user even along sliding planes of different angles/inclines.

## Claims

1. Carrying trolley (1) arranged for carrying a piece of luggage, in particular a backpack, comprising:
- a frame (2) arranged for supporting said piece of luggage and provided with a lower support part (3) configured to restingly receive a base of said piece of luggage;
- telescopic rod means (11) comprising at least one upper rod (12) and at least one lower rod (13) fixed to said at least one lower support part (3); said at least one upper rod (12) and said at least one lower rod (13) being so reciprocally connected that said at least one upper rod (12) is slidable with respect to said at least one lower rod (13) so that said telescopic rod means (11) can alternatively adopt an extended end-of-stroke configuration (A) and a retracted end-of-stroke configuration (B);
- a gripping handle (17) obtained in said telescopic rod means (11) and intended to be gripped by a user to pull said carrying trolley (1) along a sliding surface (T);
- a pair of skate devices (20a, 20b) fitted to said frame (2) on opposite sides of said lower support part (3) to facilitate in use sliding of said carrying trolley (1) along said sliding surface (T), each skate device (20a, 20b) comprising a plurality of rolling elements (21a, 21b, 21c, 21d) each of which is rotatable around a respective rotation axis ^{®}, the rotation axes of said plurality of rolling elements (21a, 21b, 21c, 21d) being substantially parallel to one another;
wherein the rolling elements (21a, 21b, 21c, 21d) of each skate device (20a, 20b) are at least four, forming a consecutive and distinct first pair (21a, 21b) and second pair (21c, 21d) of rolling elements for each skate device (20a, 20b), the rotation axes (R) of said first pair of rolling elements (21a, 21b) lying on a first plane and the rotation axes (R) of said second pair of rolling elements (21c, 21d) lying on a second plane, said first plane and said second plane intersecting on an intersection line (I) that bounds a first half plane (β) on which the rotation axes (R) of said first pair of rolling elements (21a, 21b) lie on a second half plane (δ) on which the rotation axes (R) of said second pair of rolling elements (21c, 21d) lie, in which said first half plane (β) and second half plane (δ) form together an angle (α) that is greater than or the same as 90°.

2. Carrying trolley (1) according to claim 1, wherein said angle (α) is comprised between 90° and 110°, in particular is 108°.

3. Carrying trolley (1) according to claim 1 or 2, wherein each skate device (20a, 20b) comprises a support structure (22a, 22b) arranged for rotatably supporting said plurality of rolling elements (21a, 21b, 21c, 21d), said support structure (22a, 22b) being stiffly fixed to said frame (2).

4. Carrying trolley (1) according to any one of the preceding claims, wherein said lower support part (3) comprises a bottom wall (4) provided with a bottom face (5) arranged for contacting said base of said piece of luggage and a side wall (6) provided with a containing surface (7) arranged for containing laterally said piece of luggage, said side wall (6) projecting away from said bottom wall (5).

5. Carrying trolley (1) according to any one of the preceding claims, wherein said frame (2) comprises a front part (26) connected to said lower part (3), said front part (26) comprising a first part (27) projecting from a front portion (28) of said side wall (26) and extending transversely to said bottom wall (5), said front part (26) further comprising a second part (30) provided with a first opening (31) arranged for acting as a further handle intended to be gripped by said user to pull said carrying trolley (1) along said sliding surface (T), said handle (17) and said further handle being obtained at such a height with respect to said bottom face (5) that said user can grasp the handles simultaneously when said telescopic rod means (11) is in said retracted end-of-stroke configuration (B).

6. Carrying trolley (1) according to any one of claims 3 to 5, as claims 4 or 5 are appended to claim 3, wherein said support structure (22a, 22b) comprises a first wing element (23) and a second wing element (24) arranged for supporting on opposite sides each rolling element (21a, 21b, 21c, 21d), said first wing element (23) and said second wing element (24) leading away from said front portion (28) of said side wall (6) away from a front face (32) thereof.

7. Carrying trolley (1) according to claim 6, wherein at least one portion of said first wing element (23) defines a portion of side wall (6).

8. Carrying trolley (1) according to any one of claims 3 to 7, as claims 4 or 5 are appended to claim 3, in which each support structure (22a, 22b) is made as a single body with said side wall (6).

9. Carrying trolley (1) according to any one of claims 6 to 8, as claim 8 is appended to claim 6 or 7, in which in said frame (2) a plurality of lightening openings (35) is obtained arranged for lightening a mass of said carrying trolley (1), one or more of which is/are obtained in said bottom wall (4) and/or in said front part (26) and/or in said side wall (6) and/or in said first wing element (23).

10. Carrying trolley (1) according to any one of the preceding claims, wherein an interaxle spacing between rotation axes (R) of rolling elements (21a, 21b, 21c, 21d) of each pair of rolling elements (21a, 21b, 21c, 21d) is comprised between 65.8 cm and 7.1 cm, in particular between 6.0 cm and 6.9 cm.

11. Carrying trolley (1) according to any one of the preceding claims, said rotation axes (R) of said plurality of rolling elements (21a, 21b, 21c, 21d) intersecting a longitudinal plane (γ) perpendicular thereto in a plurality of points, said points defining the vertices of an irregular polygon.

12. Carrying trolley (1) according to any one of the preceding claims, wherein each rolling element (21a, 21b, 21c, 21d) of a skate device (20a; 20b) is coaxial to a respective rolling element (21a, 21b, 21c, 21d) of the other skate device (20b; 20a).

13. Carrying trolley (1) according to any one of the preceding claims, wherein each skate device (1) comprising four rolling elements (21a, 21b, 21c, 21d), a first rolling element (21a) and a second rolling element (21b) belonging to the first pair of rolling elements and a third rolling element (21c) and a fourth rolling element (21d) belonging to the second pair of rolling elements, said first rolling element (21a), said second rolling element (21b), said third rolling element (21c) and said fourth rolling element (21d) being arranged in succession, an interaxle spacing between the rotation axis (R) of said second rolling element (21b) and of said third rolling element (21c) being greater than an interaxle spacing between the rotation axis (R) of said first rolling element (21a) and of said second rolling element (21b) and between the axis (R) of said third rolling element (21c) and of said fourth rolling element (21d).

14. Carrying trolley (1) according to any one of claims 3 to 13, as claims 4, 5, and 10 to 13 are appended to an appended claim of claim 3, wherein each of said rolling elements (21a, 21b, 21c, 21d) is an idle wheel or roller fitted to said support structure (22a, 22b) that is freely rotatable around the respective rotation axis (R).

15. Carrying trolley (1) according to any one of the preceding claims, wherein said rotation axes (R) of said rolling elements (21a, 21b, 21c, 21d) are arranged both at an increasing distance along a vertical direction (V) substantially parallel to, and with a direction opposite, the vector associated with the force of gravity, and along a sliding direction (D) substantially perpendicular to said vertical direction (V).

## Patentansprüche

1. Transportwagen (1), der zum Transportieren eines Gepäckstücks, insbesondere eines Rucksacks, angeordnet ist, umfassend:
- einen Rahmen (2), der zum Stützen des Gepäckstücks angeordnet und mit einem unteren Stützteil (3) bereitgestellt ist, das konfiguriert ist, um eine Basis des Gepäckstücks aufliegend aufzunehmen;
- Teleskopstangenmittel (11), umfassend mindestens eine obere Stange (12) und mindestens eine untere Stange (13), die an dem mindestens einen unteren Stützteil (3) befestigt sind; wobei die mindestens eine obere Stange (12) und die mindestens eine untere Stange (13) so wechselseitig verbunden sind, dass die mindestens eine obere Stange (12) in Bezug auf die mindestens eine untere Stange (13) verschiebbar ist, sodass die Teleskopstangenmittel (11) wahlweise eine ausgezogene Endanschlagkonfiguration (A) und eine eingefahrene Endanschlagkonfiguration (B) annehmen können;
- einen Haltegriff (17), der in den Teleskopstangenmitteln (11) erhalten wird und bestimmt ist, um durch einen Benutzer gegriffen zu werden, um den Transportwagen (1) entlang einer Verschiebeoberfläche (T) zu ziehen;
- ein Paar von Gleitvorrichtungen (20a, 20b), die an dem Rahmen (2) auf gegenüberliegenden Seiten des unteren Stützteils (3) montiert sind, um in Verwendung ein Verschieben des Transportwagens (1) entlang der Verschiebeoberfläche (T) zu erleichtern, jede Gleitvorrichtung (20a, 20b) umfassend eine Vielzahl von Rollelementen (21a, 21b, 21c, 21d), von denen jedes um eine jeweilige Drehachse ^{®} herum drehbar ist, wobei die Drehachsen der Vielzahl von Rollelementen (21a, 21b, 21c, 21d) im Wesentlichen parallel zueinander sind;
wobei die Rollelemente (21a, 21b, 21c, 21d) jeder Gleitvorrichtung (20a, 20b) mindestens vier sind, die ein aufeinanderfolgendes und unterschiedliches erstes Paar (21a, 21b) und zweites Paar (21c, 21d) von Rollelementen für jede Gleitvorrichtung (20a, 20b) ausbilden, wobei die Drehachsen (R) des ersten Paars von Rollelementen (21a, 21b) auf einer ersten Ebene liegen und die Drehachsen (R) des zweiten Paars von Rollelementen (21c, 21d) auf einer zweiten Ebene liegen, wobei sich die erste Ebene und die zweite Ebene auf einer Schnittlinie (I) schneiden, die eine erste Halbebene (β), auf der die Drehachsen (R) des ersten Paars von Rollelementen (21a, 21b) liegen, und eine zweite Halbebene (δ) abgrenzt, auf der die Drehachsen (R) des zweiten Paars von Rollelementen (21c, 21d) liegen, wobei die erste Halbebene (β) und die zweite Halbebene (δ) zusammen einen Winkel (α) ausbilden, der größer als oder gleich 90° ist.

2. Transportwagen (1) nach Anspruch 1, wobei der Winkel (α) zwischen 90° und 110° umfasst ist, insbesondere 108° beträgt.

3. Transportwagen (1) nach Anspruch 1 oder 2, wobei jede Gleitvorrichtung (20a, 20b) eine Stützstruktur (22a, 22b), die zum drehbaren Stützen der Vielzahl von Rollelementen (21a, 21b, 21c, 21d) angeordnet ist, umfasst, wobei die Stützstruktur (22a, 22b) steif an dem Rahmen (2) befestigt ist.

4. Transportwagen (1) nach einem der vorstehenden Ansprüche, wobei das untere Stützteil (3) eine Bodenwand (4), die mit einer Bodenfläche (5) bereitgestellt ist, die zum Berühren der Basis des Gepäckstücks angeordnet ist, und eine Seitenwand (6) umfasst, die mit einer Aufnahmeoberfläche (7), die zum lateralen Aufnehmen des Gepäckstücks angeordnet ist, bereitgestellt ist, wobei die Seitenwand (6) von der Bodenwand (5) weg vorsteht.

5. Transportwagen (1) nach einem der vorstehenden Ansprüche, wobei der Rahmen (2) ein Vorderteil (26), das mit dem unteren Teil (3) verbunden ist, umfasst, das Vorderteil (26) umfassend ein erstes Teil (27), das von einem vorderen Abschnitt (28) der Seitenwand (26) vorsteht und sich quer zu der Bodenwand (5) erstreckt, das Vorderteil (26) ferner umfassend ein zweites Teil (30), das mit einer ersten Öffnung (31) bereitgestellt wird, die zum Dienen als ein weiterer Griff angeordnet ist, der bestimmt ist, um durch den Benutzer gegriffen zu werden, um den Transportwagen (1) entlang der Verschiebeoberfläche (T) zu ziehen, wobei der Griff (17) und der weitere Griff in einer derartigen Höhe in Bezug auf die Bodenfläche (5) erhalten werden, dass der Benutzer die Griffe gleichzeitig ergreifen kann, wenn sich die Teleskopstangenmittel (11) in der eingefahrenen Endanschlagkonfiguration (B) befinden.

6. Transportwagen (1) nach einem der Ansprüche 3 bis 5, während Anspruch 4 oder 5 an Anspruch 3 angehängt ist, wobei die Stützstruktur (22a, 22b) ein erstes Flügelelement (23) und ein zweites Flügelelement (24), die zum Stützen an gegenüberliegenden Seiten jedes Rollelements (21a, 21b, 21c, 21d) angeordnet sind, umfasst, wobei das erste Flügelelement (23) und das zweite Flügelelement (24) von dem Vorderabschnitt (28) der Seitenwand (6) weg von einer Vorderfläche (32) davon wegführen.

7. Transportwagen (1) nach Anspruch 6, wobei mindestens ein Abschnitt des ersten Flügelelements (23) einen Abschnitt der Seitenwand (6) definiert.

8. Transportwagen (1) nach einem der Ansprüche 3 bis 7, während Anspruch 4 oder 5 an Anspruch 3 angehängt ist, bei dem jede Stützstruktur (22a, 22b) als ein einziger Körper mit der Seitenwand (6) hergestellt ist.

9. Transportwagen (1) nach einem der Ansprüche 6 bis 8, während Anspruch 8 an Anspruch 6 oder 7 angehängt ist, bei dem in dem Rahmen (2) eine Vielzahl von Erleichterungsöffnungen (35) erhalten ist, die zum Erleichtern einer Masse des Transportwagens (1) angeordnet sind, von denen eine oder mehrere in der Bodenwand (4) und/oder in dem Vorderteil (26) und/oder in der Seitenwand (6) und/oder in dem ersten Flügelelement (23) erhalten ist/sind.

10. Transportwagen (1) nach einem der vorstehenden Ansprüche, wobei ein Achsabstand zwischen Drehachsen (R) von Rollelementen (21a, 21b, 21c, 21d) jedes Paars von Rollelementen (21a, 21b, 21c, 21d) zwischen 65,8 cm und 7,1 cm, insbesondere zwischen 6,0 cm und 6,9 cm, umfasst ist.

11. Transportwagen (1) nach einem der vorstehenden Ansprüche, wobei die Drehachsen (R) der Vielzahl von Rollelementen (21a, 21b, 21c, 21d) eine dazu senkrechte Längsebene (γ) in einer Vielzahl von Punkten schneiden, wobei die Punkte die Ecken eines unregelmäßigen Polygons definieren.

12. Transportwagen (1) nach einem der vorstehenden Ansprüche, wobei jedes Rollelement (21a, 21b, 21c, 21d) einer Gleitvorrichtung (20a; 20b) koaxial zu einem jeweiligen Rollelement (21a, 21b, 21c, 21d) der anderen Gleitvorrichtung (20b; 20a) ist.

13. Transportwagen (1) nach einem der vorstehenden Ansprüche, jede Gleitvorrichtung (1) umfassend vier Rollelemente (21a, 21b, 21c, 21d), wobei ein erstes Rollelement (21a) und ein zweites Rollelement (21b) zu dem ersten Paar von Rollelementen gehören und ein drittes Rollelement (21c) und ein viertes Rollelement (21d) zu dem zweiten Paar von Rollelementen gehören, wobei das erste Rollelement (21a), das zweite Rollelement (21b), das dritte Rollelement (21c) und das vierte Rollelement (21d) nacheinander angeordnet sind, wobei ein Achsabstand zwischen der Drehachse (R) des zweiten Rollelements (21b) und des dritten Rollelements (21c) größer als ein Achsabstand zwischen der Drehachse (R) des ersten Rollelements (21a) und des zweiten Rollelements (21b) und zwischen der Achse (R) des dritten Rollelements (21c) und des vierten Rollelements (21d) ist.

14. Transportwagen (1) nach einem der Ansprüche 3 bis 13, während die Ansprüche 4, 5 und 10 bis 13 an einen angehängten Anspruch von Anspruch 3 angehängt sind, wobei jedes der Rollelemente (21a, 21b, 21c, 21d) ein Laufrad oder eine Rolle ist, die an der Stützstruktur (22a, 22b) angebracht ist, die um die jeweilige Drehachse (R) herum frei drehbar ist.

15. Transportwagen (1) nach einem der vorstehenden Ansprüche, wobei die Drehachsen (R) der Rollelemente (21a, 21b, 21c, 21d) sowohl in einer zunehmenden Entfernung entlang einer vertikalen Richtung (V), die im Wesentlichen parallel zu dem der Schwerkraft zugehörigen Vektor und mit einer zu diesem entgegengesetzten Richtung verläuft, als auch entlang einer Verschieberichtung (D), die im Wesentlichen senkrecht zu der vertikalen Richtung (V) verläuft, angeordnet sind.

## Revendications

1. Chariot de transport (1) agencé pour le transport d'un bagage, en particulier d'un sac à dos, comprenant:
- un cadre (2) agencé pour le support dudit bagage et pourvu d'une partie de support inférieure (3) conçue pour recevoir au repos une base dudit bagage;
- un moyen de tige télescopique (11) comprenant au moins une tige supérieure (12) et au moins une tige inférieure (13) fixée à ladite au moins une partie de support inférieure (3); ladite au moins une tige supérieure (12) et ladite au moins une tige inférieure (13) étant reliées si réciproquement que ladite au moins une tige supérieure (12) peut coulisser par rapport à ladite au moins une tige inférieure (13) de sorte que ledit moyen de tige télescopique (11) peut adopter alternativement une conception de fin de course étendue (A) et une conception de fin de course rétractée (B);
- une poignée de préhension (17) obtenue dans ledit moyen de tige télescopique (11) et prévue pour être saisie par un utilisateur pour tirer ledit chariot de transport (1) le long d'une surface de glissement (T);
- une paire de dispositifs de patin (20a, 20b) fixés audit cadre (2) sur des côtés opposés de ladite partie de support inférieure (3) pour faciliter en cours d'utilisation le glissement dudit chariot porteur (1) le long de ladite surface de glissement (T), chaque dispositif de patin (20a, 20b) comprenant une pluralité d'éléments roulants (21a, 21b, 21c, 21d) dont chacun peut tourner autour d'un axe de rotation ^{®} respectif, les axes de rotation de ladite pluralité d'éléments roulants (21a, 21b, 21c, 21d) étant sensiblement parallèles les uns aux autres;
dans lequel les éléments roulants (21a, 21b, 21c, 21d) de chaque dispositif de patin (20a, 20b) sont au moins quatre, formant une première paire (21a, 21b) et une seconde paire (21c, 21d) consécutives et distinctes d'éléments roulants pour chaque dispositif de patin (20a, 20b), les axes de rotation (R) de ladite première paire d'éléments roulants (21a, 21b) reposant sur un premier plan et les axes de rotation (R) de ladite seconde paire d'éléments roulants (21c, 21d) reposant sur un second plan, ledit premier plan et ledit second plan se coupant sur une ligne d'intersection (I) qui délimite un premier demi-plan (β) sur lequel les axes de rotation (R) de ladite première paire d'éléments roulants (21a, 21b) reposent sur un second demi-plan (δ) sur lequel les axes de rotation (R) de ladite seconde paire d'éléments roulants (21c, 21d) reposent, dans lesquels lesdits premier demi-plan (β) et second demi-plan (δ) forment ensemble un angle (α) qui est supérieur ou égal à 90°.

2. Chariot de transport (1) selon la revendication 1, dans lequel ledit angle (α) est compris entre 90° et 110°, en particulier est de 108°.

3. Chariot de transport (1) selon la revendication 1 ou 2, dans lequel chaque dispositif de patin (20a, 20b) comprend une structure de support (22a, 22b) agencée pour le support rotatif de ladite pluralité d'éléments roulants (21a, 21b, 21c, 21d), ladite structure de support (22a, 22b) étant fixée de manière rigide audit cadre (2).

4. Chariot de transport (1) selon l'une quelconque des revendications précédentes, dans lequel ladite partie de support inférieure (3) comprend une paroi inférieure (4) pourvue d'une face inférieure (5) agencée pour l'entrée en contact de ladite base dudit bagage et d'une paroi latérale (6) pourvue d'une surface de confinement (7) agencée pour le confinement latéral dudit bagage, ladite paroi latérale (6) faisant saillie à l'écart de ladite paroi inférieure (5).

5. Chariot de transport (1) selon l'une quelconque des revendications précédentes, dans lequel ledit cadre (2) comprend une partie avant (26) reliée à ladite partie inférieure (3), ladite partie avant (26) comprenant une première partie (27) faisant saillie à partir d'une partie avant (28) de ladite paroi latérale (26) et s'étendant transversalement à ladite paroi inférieure (5), ladite partie avant (26) comprenant en outre une seconde partie (30) pourvue d'une première ouverture (31) agencée permettant de servir de poignée supplémentaire prévue pour être saisie par ledit utilisateur pour tirer ledit chariot de transport (1) le long de ladite surface de glissement (T), ladite poignée (17) et ladite poignée supplémentaire étant obtenues à une hauteur telle par rapport à ladite face inférieure (5) que ledit utilisateur peut saisir les poignées simultanément lorsque ledit moyen de tige télescopique (11) est dans ladite conception de fin de course rétractée (B).

6. Chariot de transport (1) selon l'une quelconque des revendications 3 à 5, les revendications 4 ou 5 étant annexées à la revendication 3, dans lequel ladite structure de support (22a, 22b) comprend un premier élément d'aile (23) et un second élément d'aile (24) agencés pour le support sur des côtés opposés de chaque élément roulant (21a, 21b, 21c, 21d), ledit premier élément d'aile (23) et ledit second élément d'aile (24) s'éloignant de ladite partie avant (28) de ladite paroi latérale (6) à l'écart d'une face avant (32) de celle-ci.

7. Chariot de transport (1) selon la revendication 6, dans lequel au moins une partie dudit premier élément d'aile (23) définit une partie de paroi latérale (6).

8. Chariot de transport (1) selon l'une quelconque des revendications 3 à 7, les revendications 4 ou 5 étant annexées à la revendication 3, dans lequel chaque structure de support (22a, 22b) est réalisée comme un seul corps avec ladite paroi latérale (6).

9. Chariot de transport (1) selon l'une quelconque des revendications 6 à 8, la revendication 8 étant annexée à la revendication 6 ou 7, dans lequel dans ledit cadre (2) une pluralité d'ouvertures d'allègement (35) est obtenue agencées pour l'allègement d'une masse dudit chariot de transport (1), dont une ou plusieurs est/sont obtenue(s) dans ladite paroi inférieure (4) et/ou dans ladite partie avant (26) et/ou dans ladite paroi latérale (6) et/ou dans ledit premier élément d'aile (23).

10. Chariot de transport (1) selon l'une quelconque des revendications précédentes, dans lequel un espacement inter-axes entre des axes de rotation (R) d'éléments roulants (21a, 21b, 21c, 21d) de chaque paire d'éléments roulants (21a, 21b, 21c, 21d) est compris entre 65,8 cm et 7,1 cm, en particulier entre 6,0 cm et 6,9 cm.

11. Chariot de transport (1) selon l'une quelconque des revendications précédentes, lesdits axes de rotation (R) de ladite pluralité d'éléments roulants (21a, 21b, 21c, 21d) coupant un plan longitudinal (γ) perpendiculaire à ceux-ci en une pluralité de points, lesdits points définissant les sommets d'un polygone irrégulier.

12. Chariot de transport (1) selon l'une quelconque des revendications précédentes, dans lequel chaque élément roulant (21a, 21b, 21c, 21d) d'un dispositif de patin (20a; 20b) est coaxial à un élément roulant respectif (21a, 21b, 21c, 21d) de l'autre dispositif de patin (20b; 20a).

13. Chariot de transport (1) selon l'une quelconque des revendications précédentes, dans lequel chaque dispositif de patin (1) comprenant quatre éléments roulants (21a, 21b, 21c, 21d), un premier élément roulant (21a) et un deuxième élément roulant (21b) appartenant à la première paire d'éléments roulants et un troisième élément roulant (21c) et un quatrième élément roulant (21d) appartenant à la seconde paire d'éléments roulants, ledit premier élément roulant (21a), ledit deuxième élément roulant (21b), ledit troisième élément roulant (21c) et ledit quatrième élément roulant (21d) étant agencés successivement, un espacement inter-axes entre l'axe de rotation (R) dudit deuxième élément roulant (21b) et dudit troisième élément roulant (21c) étant supérieur à un espacement inter-axes entre l'axe de rotation (R) dudit premier élément roulant (21a) et dudit deuxième élément roulant (21b) et entre l'axe (R) dudit troisième élément roulant (21c) et dudit quatrième élément roulant (21d).

14. Chariot de transport (1) selon l'une quelconque des revendications 3 à 13, les revendications 4, 5 et 10 à 13 étant annexées à une revendication annexée de la revendication 3, dans lequel chacun desdits éléments roulants (21a, 21b, 21c, 21d) est une roue libre ou un rouleau fixé à ladite structure de support (22a, 22b) qui peut tourner librement autour de l'axe de rotation respectif (R).

15. Chariot de transport (1) selon l'une quelconque des revendications précédentes, dans lequel lesdits axes de rotation (R) desdits éléments roulants (21a, 21b, 21c, 21d) sont agencés à la fois à une distance croissante le long d'un sens vertical (V) sensiblement parallèle, et avec un sens opposé au vecteur associé à la force de gravité, et le long d'un sens de glissement (D) sensiblement perpendiculaire audit sens vertical (V).
